Europäisches Patentamt

(19) European Patent Office

Office européen des brevets

(11) Numéro de publication : **0 225 201 B1**

# FASCICULE DE BREVET EUROPEEN

(12)

(45) Date de publication du fascicule du brevet :
**16.01.91 Bulletin 91/03**

(51) Int. Cl.⁵ : **C02F 3/10**, B01D 39/08, D04H 1/00

(21) Numéro de dépôt : **86402144.9**

(22) Date de dépôt : **01.10.86**

(54) **Garnissage textile formant support pour bio-transformation et séparation de phase.**

(30) Priorité : **01.10.85 FR 8514518**

(43) Date de publication de la demande :
**10.06.87 Bulletin 87/24**

(45) Mention de la délivrance du brevet :
**16.01.91 Bulletin 91/03**

(84) Etats contractants désignés :
**DE GB IT**

(56) Documents cités :
**EP-A- 0 036 031
CH-A- 515 374
FR-A- 2 166 129
FR-A- 2 365 528**

(73) Titulaire : **MILCAP FRANCE S.A.
"Le Courtil", Nuaille
F-49340 Trementines (FR)**
Titulaire : **CENTRE SCIENTIFIQUE ET
TECHNIQUE DU BATIMENT
4, avenue du Recteur Poincaré
F-75782 Paris Cédex 16 (FR)**

(72) Inventeur : **Challet, Paul
Le Courtil Nuaille
F-49340 Trementines (FR)**
Inventeur : **Brochard, Patrice
24 Boulevard Victor Hugo
F-49300 Cholet (FR)**
Inventeur : **Cailleton, Jacques
Route de Cholet
F-49360 Maulevrier (FR)**
Inventeur : **Dautais, Jean-Pierre
73 Rue Jean Mermoz
F-44340 Bouguenais (FR)**

(74) Mandataire : **CABINET BONNET-THIRION
95 Boulevard Beaumarchais
F-75003 Paris (FR)**

Jouve, 18, rue Saint-Denis, 75001 PARIS

## Description

La présente invention concerne un garnissage textile et son procédé de fabrication. Plus particulièrement ce garnissage textile est destiné à servir de support pour des bio-transformations et des séparations de phases.

On connaît déjà comme substrat de culture l'utilisation de fibres textiles notamment synthétiques. Ces substrats de culture se présentent sous la forme de textiles munis sur une de leurs faces d'une fourrure. Cette fourrure loge des matières nutritives destinées à permettre la croissance de cellules vivantes ou plantes insérées dans ce milieu et le substrat de culture forme ainsi un support de croissance pour ces cellules vivantes ou plantes.

De tels substrats de culture nécessitent pour leur mise en forme des opérations de confection relativement longues et onéreuses.

D'autre part, il est déjà connu de réaliser des supports ayant pour but de fixer des micro-organismes, des molécules, des métaux... actifs lorsqu'ils sont placés dans un fluide à traiter. Ces cellules vivantes, molécules et métaux seront ci-après appelés principes fixés.

Or les supports réalisés jusqu'à présent sont des supports solides qui ont tendance à se colmater par accumulation en leur sein, d'éléments provenant du milieu fluide coopérant avec les principes fixés.

Ces supports solides réalisés jusqu'à présent sont conçus en effet pour présenter le maximum de porosité de sorte à offrir des sites de fixation pour les principes qu'ils contiennent, mais leur décolmatage est difficile et coûteux.

Il est déjà connu notamment par le brevet CH 515 374, de réaliser des tissus non tissés. Pour donner à ces tissus un aspect de tissu tissé, et leur permettre notamment de se déformer, de s'allonger, des fentes de très petites dimensions, non visibles sont pratiquées dans ces tissus. Cependant de tels tissus ne peuvent être employés comme support pour des bio-transformations et des séparations de phases, car ils se colmateraient très vite, et sont peu résistants. En outre ces tissus n'offrent pas de surfaces appropriées pour l'accrochage d'éléments actifs tels que des micro-organismes destinés à traiter le fluide dans lequel ils sont placés.

Il est également déjà connu par les brevets FR 2 365 528 et 2 166 129 des installations de traitement d'eaux résiduaires mettant en oeuvre des tissus soit non tissés et munis de fourrure permettant la nidification de microorganismes, soit des tissus servant de filtres.

Cependant chacun de ces types de tissus présente l'inconvénient de se colmater facilement et d'être difficile, voire impossible à décolmater.

La présente invention a pour but de pallier ces différents inconvénients grâce à un procédé de fabrication de garnissage textile susceptible de conduire avec un minimum d'opérations à des structures de support directement utilisables.

L'invention a également pour but de ménager dans les garnissages textiles réalisés un réseau d'ouvertures de nature à réduire les risques de colmatage et à faciliter les opérations de décolmatage en cas de besoin.

La présente invention a également pour but de créer un garnissage textile formant support actif et ne présentant pas les inconvénients des supports de culture.

A cet effet la présente invention concerne un procédé d'élaboration d'un garnissage textile destiné à servir de support pour des bio-transformations et des séparations de phase dans un milieu polyphasique comportant les étapes suivantes :
– élaboration de fils à partir de fibres ;
– formation à partir des fils élaborés d'un soubassement en forme de nappe continue ;
– greffage d'une fourrure réalisée avec les fibres élaborées sur l'une des faces du soubassement;
– le garnissage ainsi formé ayant une structure transversale hétérogène due à une caractéristique non constante dans le sens transversal du soubassement et étant susceptible de s'enrouler sur lui-même ; ledit procédé étant caractérisé en ce qu'on effectue en outre un :
– découpage d'une pluralité de fentes répétées dans la direction de l'élaboration de la nappe de sorte que les bords des fentes s'enroulent sur eux-mêmes et créent ainsi des structures à fourrure saillante et des zones d'ouvertures entre ces structures.

La présente invention concerne également un garnissage textile formant support pour des bio-transformations et séparations de phases comportant un soubassement formant une nappe continue, et une fourrure formée sur une des faces du soubassement, le garnissage ayant une structure transversale hétérogène susceptible de s'enrouler sur lui-même, caractérisé en ce qu'une pluralité de fentes sont disposées dans la direction de l'élaboration de la nappe, les bords des fentes s'enroulant sur eux-mêmes et laissant entre eux des zones d'ouvertures permettant la libre circulation d'un fluide ambiant.

Ainsi il est possible de réaliser au moyen d'opérations simples, rapides et économiques de découpage, diverses configurations de structures de garnissages textiles particulièrement bien adaptés à former des supports pour des bio-transformations et des opérations de séparation de phase.

Ces garnissages textiles présentent en outre l'avantage de tenir peu de place lorsqu'ils ne sont pas en fonctionnement, ce qui facilite leur transport et le rend moins coûteux.

D'autres objets caractéristiques et avantages de l'invention ressortiront d'ailleurs de la description qui va suivre, donnés à titre d'exemple en référence aux dessins annexés dans lesquels :

la figure 1 est une vue en perspective montrant un garnissage textile selon l'invention avant l'étape de coupe ;

la figure 2a est une vue en plan d'un garnissage textile selon l'invention, montrant l'étape de coupe du textile ;

la figure 2b est une vue analogue à la figure 2a montrant l'étape d'enroulement du textile ;

la figure 2c est une vue en coupe selon la ligne II-II de la figure 2b ;

les figures 3a et 3b sont des vues analogues aux figures 2a, 2b et présentent une variante de coupe et d'enroulement respectivement ;

les figures 4a et 4b sont des vues analogues aux figures 2a et 2b et présentent une autre variante de coupe et d'enroulement respectivement ;

la figure 5 est l'illustration schématique d'un mode de tonte ;

la figure 6 est l'illustration d'une application des garnissages textiles.

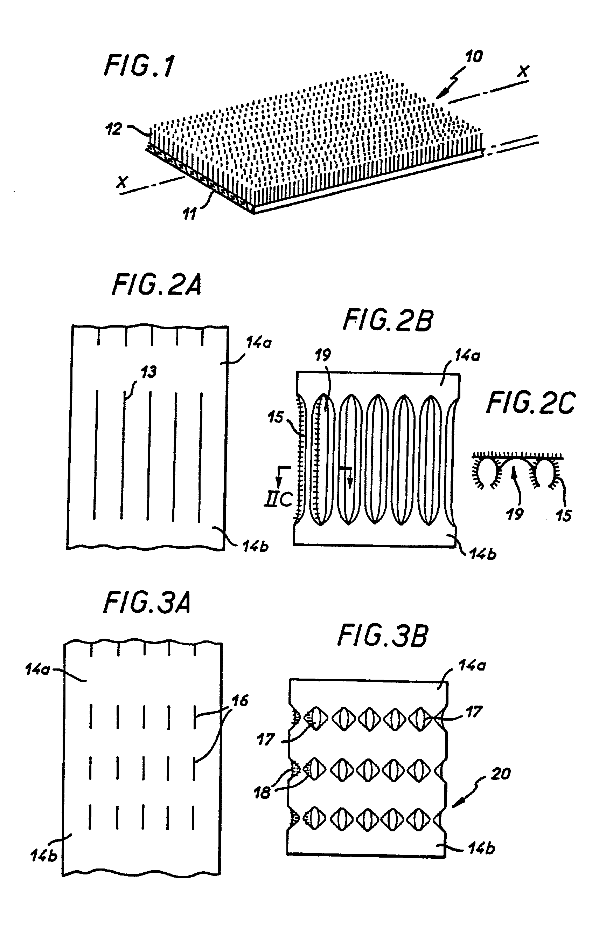

Selon le mode de réalisation représenté aux figure 1 à 2b, le garnissage textile 10 comporte un soubassement 11, et une fourrure 12.

Les fibres utilisées pour la confection du soubassement 11 sont en polypropylène. Elles pourront typiquement présenter un diamètre de l'ordre du micromètre. Elles sont frisées, coupées, cardées et filées de manière connue en soi à un diamètre de l'ordre du millimètre, pour être ensuite tricotées sous forme de nappe continue. Lors du tricotage on greffe à l'aide d'aiguilles des touffes de fibres semblables dans les mailles du tricot. Les fibres ainsi greffées font saillie sur une des faces du tissu et constituent ainsi ladite fourrure 12. On effectue ensuite un grattage destiné à éliminer les fibres greffées non correctement fixées au soubassement 11.

La densité moyenne de la fourrure ainsi réalisée est par exemple de $8.10^4$ fibres/cm$^2$.

Le textile ainsi réalisé de manière connue en soi subit ensuite une tonte de sorte à régulariser la hauteur de la fourrure 12. Cette hauteur peut varier de $10^{-3}$m à 0,05 - 0.06 m. Plus particulièrement elle est de 0,03 m. Pour certaines applications on prévoit un traitement dit de moutonnage qui consiste en la combinaison d'un traitement thermique à la vapeur à 120°C et d'un brassage mécanique. Ce traitement a pour conséquence de rassembler les poils de la fourrure en touffes séparées.

Selon l'invention, l'élaboration de la structure de support à partir de la nappe ainsi préparée comporte essentiellement une opération de coupe : dans le cas de l'exemple illustré en figure 2a. Cette coupe détermine une pluralité de fentes 13 parallèles à l'axe longitudinal de la formation de la nappe.

Des bandes non coupées 14a-14b sont ménagées entre groupes de fentes 13 successifs. Ainsi dans une application les coupes ont une longueur de 0,8 m et l'espacement entre les fentes est de 0,08 m.

Une nappe textile tricotée et aiguilletée, comme décrite ci-dessus, présente comme on le sait dans sa structure transversale une hétérogénéité donnant lieu à des tensions différentielles, qui ont pour résultat une tendance naturelle de la nappe à s'enrouler sur elle-même d'un côté, en l'occurrence du côté du soubassement 11.

Ainsi en vertu de ce phénomène, les deux lèvres de chaque fente 13 s'écartent l'une de l'autre, la bande de textile se trouvant entre deux fentes voisines s'enroule sur elle-même et forme des tronçons cylindriques 15 avec la fourrure dressée sur la face convexe.

On a ainsi une alternance d'éléments cylindriques 15 et d'ouvertures 19.

On effectue ensuite un étirage du textile ce qui tend à régulariser la forme des cylindres 15 réalisés. Ces cylindres pourront être amenés par exemple à une longueur de 1 m. Le textile 10 ainsi réalisé est alors l'objet d'un ennoblissement par exemple par gainage pouvant comporter un trempage dans une solution d'alginate de sodium chargée en micro-organismes et en peptone destinée à servir d'alimentation à ces micro-organismes, une opération d'insolubilisation par un sel de calcium, égouttage et désydratation pour stockage.

Les supports ainsi préparés sont adaptés à être placés sans autre préparation par exemple dans une enceinte d'épuration d'eaux usées.

En variante (figures 3a, 3b) on effectue une coupe discontinue selon des fentes 16 fragmentées toujours parallèles entre elles et suivant l'axe longitudinal (X-X) de la nappe.

On obtient après enroulement de chacune des zones actives de ces fentes une structure présentant des zones d'ouvertures 17, alternant avec des zones 18 recouvertes de fourrure à leur extérieur.

La structure ainsi obtenue présente une forme de grille 20 (figure 3b).

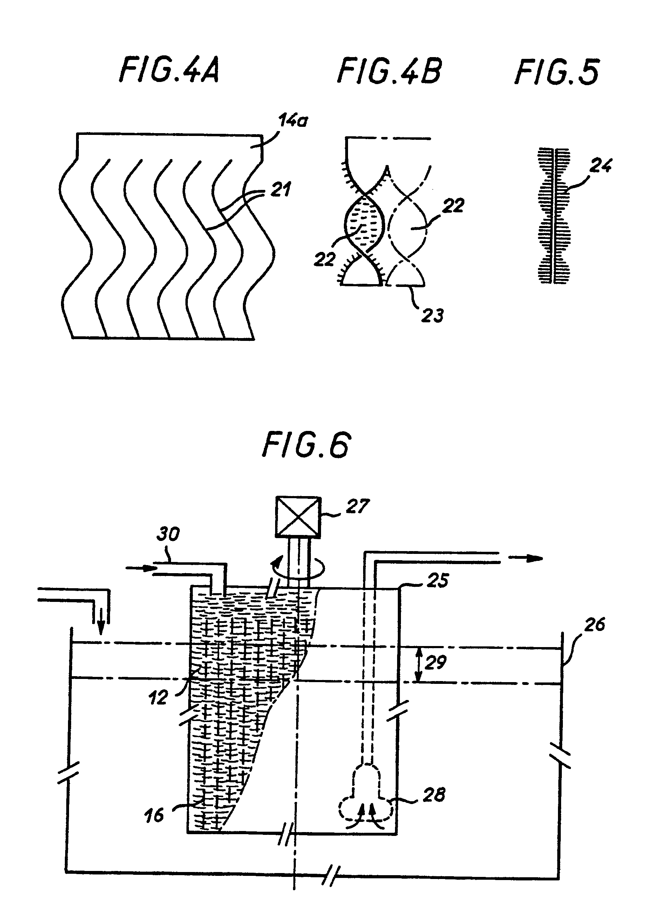

Selon le mode de réalisation des figures 4a, 4b, on pratique une pluralité de fentes 21 de forme sinusoïdale coupant complètement une des bandes de fixation 14a ou 14b, selon le même phénomène que précédemment.

Les zones actives de chaque fente s'enroulent elles-mêmes et l'on obtient une pluralité de structures hélicoïdales 22. Dans le cas considéré, chaque structure hélicoïdale 22 est munie d'un lest à son extrémité inférieure 23 de sorte qu'elle se maintienne en position.

En variante, lorsque c'est la bande de fixation 14a qui est coupée par les fentes 21, on munit les extrémités libres des structures hélicoïdales de moyens de flottaison (non représenté).

Le procédé de fabrication précédemment décrit permet d'utiliser toutes sortes de fibres synthétiques (PVC, polypropylène, polyéthylène, polyester, nylon), artificielles (viscose et analogues) ou naturelles (fibre de coco, cellulose...).

Le soubassement 11 du textile peut être réalisé soit par tricotage, comme précédemment décrit, soit par aiguilletage, tissage, ou sous forme non tissée ou sous forme de tout type de nappe pouvant subir un traitement d'enroulement. Dans le cas par exemple d'un soubassement aiguilleté ou non tissé l'hétérogénéité transversale requise par l'invention peut être renforcée, voire créée, par incorporation appropriée de fils ou bandes élastiques convenablement fixés dans la structure.

Cette incorporation est effectuée soit pendant la création du soubassement 11 du textile, soit par couture, collage ou soudage de ce fil ou de cette bande sur le textile réalisé, avant coupage. Sous l'expression "nappe continue" il convient d'entendre non seulement une nappe proprement dite avex deux bandes s'étendant selon une longueur illimitée, mais aussi un produit également courant de forme tubulaire ou en gaine.

La fourrure 12 réalisée peut être effectuée de toute manière appropriée : aiguilletage, grattage, flockage, bouclage, nouage, collage ou combinaison de tout ou partie de ces techniques.

D'autre part la tonte réalisée sur la fourrure 12 est facultative, et peut être effectuée soit de façon uniforme, soit de façon non uniforme.

Ainsi dans le cas de l'exemple illustré à la figure 5, par une tonte selon un profil semi-circulaire, on réalise après déploiement des zones actives d'allure sphérique 24.

L'ennoblissement du textile peut également être réalisé par d'autres moyens que le gainage, par exemple par poudrage de toutes substances appropriées par example argile, charbon, limon, cellules vivantes lyophilisées... ou collage d'une substance comportant les principes à fixer. Cet ennoblissement peut également être facultatif et n'être réalisé qu'au moment de la mise en service du garnissage textile. Lors d'un ennoblissement par gainage, il est possible d'utiliser tout type de solution ou émulsion approprié. Notamment la peptone peut être remplacée par tout milieu nutritionnel appropriée.

Le garnissage textile selon l'invention présente l'avantage de ne nécessiter que peu d'opérations de confection pour sa mise en forme, entre les zones actives des ouvertures permettant une libre circulation du fluide ambiant, ce qui évite ou réduit les risques de colmatage. D'autre part la surface active de ces garnissages textiles est très importante car le foisonnement de la fourrure 12, et sa surface spécifique, offrent une capacité considérable de nidification et de fixation des principes actifs.

Dans un autre exemple d'application la présente invention peut servir (figure 6) à la séparation des phases d'un fluide polyphasique. A cet effet le textile utilisé est sous forme cylindrique tendu sur un tambour permable 25 de diamètre 1 m et de hauteur utile 1 m.

Le cylindre de textile est préparé selon le mode illustré par la figure 3a de façon à ménager des fentes 16, de 1 cm de longueur espacées transversalement et longitudinalement par rapport à l'axe X-X de 2 cm.

La longueur des poils de la fourrure 12, d'environ 4 cm, leur confère un pouvoir couvrant obturant partiellement les zones d'ouvertures 17, lorsqu'ils sont plaqués à la surface du soubassement 11. Cette obturation partielle joue un rôle de filtre mécanique amélioré par les propriétés biologiques du textile. Le tambour 25 garni, est disposé dans un bassin 26 contenant des boues activées et destinées à l'épuration d'eaux usées.

Le cylindre immergé de 0,80 m est animé d'un mouvement rotatif grâce à un moteur 27, la vitesse périphérique est alors de l'order de 1 m/s. L'extraction du liquide traité est assurée par une pompe immergée 28 à l'intérieur du cylindre.

Cette extraction entraîne en outre dans le tambour 25 une baisse de niveau 29 par rapport au bassin et améliore le placage de la fourrure 12 sur les ouvertures 17.

Le nettoyage peut être assuré soit par un écoulement à contre-courant en cessant le pompage et en injectant de l'eau par la tubulure 30 à l'intérieur du tambour 25, soit par changement de sens de rotation du tambour 25, soit par centrifugation en augmentant la vitesse du tambour 25, soit par modification de propriétés physiques, chimiques et biologiques du milieu, soit encore par combinaison de tout ou partie de ces méthodes.

Les textiles réalisés selon la présente invention peuvent être utilisés dans les domaines d'application les plus divers, tels que :
- épuration des eaux résiduaires,
- production d'eau potable,
- transformation de tout jus organique,
- réhabilitation d'étangs,
- séparation de fluides polyphasiques...

Bien entendu, la présente invention n'est pas limitée aux modes de réalisation choisis et représentés ; de nombreuses autres variantes restent à la portée de l'homme de l'art sans sortir du cadre de la présente invention ; par exemple les coupes effectuées peuvent être de toutes formes et dimensions.

## Revendications

1. Procédé d'élaboration d'un garnissage textile destiné à servir de support pour des bio-transformations et des séparations de phase dans un milieu polyphasique comportant les étapes suivantes :
- élaboration de fils à partir de fibres ;
- formation à partir des fils élaborés d'un soubassement en forme de nappe continue ;

– greffage d'une fourrure réalisée avec les fibres élaborées sur l'une des faces du soubassement ;

– le garnissage ainsi formé ayant une structure transversale hétérogène due à une caractéristique non constante dans le sens transversal du soubassement et étant susceptible de s'enrouler sur lui-même; ledit procédé étant caractérisé en ce qu'on effectue en outre un :

– découpage d'une pluralité de fentes répétées dans la direction de l'élaboration de la nappe de sorte que les bords des fentes s'enroulent sur eux-mêmes et créent ainsi des structures à fourrure saillante et des zones d'ouvertures entre ces structures.

2. Procédé selon la revendication 1, caractérisé en ce qu'il comporte en outre pendant l'étape de formation du dit soubassement, l'introduction de fils ou bandes élastiques dans les fils à partir duquel le soubassement est élaboré.

3. Procédé selon la revendication 1, caractérisé en ce qu'avant le découpage on introduit des fils ou bandes dans le soubassement.

4. Procédé selon une quelconque des revendications 1 à 3, caractérisé en ce qu'on étire le garnissage dans la dite direction afin de régulariser la forme des parties découpées.

5. Garnissage textile formant support pour des bio-transformations et séparations de phases comportant un soubassement (11) formant une nappe continue, et une fourrure (12) formée sur une des faces du soubassement, le garnissage ayant une structure transversale hétérogène susceptible de s'enrouler sur lui-même, caractérisé en ce qu'une pluralité de fentes sont disposées dans la direction de l'élaboration de la nappe, les bords des fentes s'enroulant sur eux-mêmes et laissant entre eux des zones d'ouvertures permettant la libre circulation d'un fluide ambiant.

6. Garnissage selon la revendication 5, caractérisé en ce que le soubassement est un tricot.

7. Garnissage selon la revendication 5, caractérisé en ce que la fourrure est définie par des touffes de fibres dans les mailles du tricot.

8. Garnissage selon l'une des revendications 5 à 7, caractérisé en ce que le soubassement comporte des fils ou bandes élastiques renforçant l'hétérogénéité inhérente dans la structure transversale du soubassement.

9. Garnissage selon l'une des revendications 5 à 8, caractérisé en ce qu'il est sous forme cylindrique tendu sur un tambour.

10. Garnissage selon l'une des revendications 5 à 9, caractérisé en ce que les poils de la fourrure peuvent obturer partiellement les zones d'ouverture.

## Claims

1. A process for the production of a textile packing which is intended to serve as a support for bio-transformation and phase separation operations in a polyphase medium comprising the following steps :

– production of threads from fibres ;

– formation from the threads produced of a base portion in the form of a continuous cloth ;

– grafting of a lining made with the fibres produced on to one of the faces of the base portion ;

– the packing formed in that way being of a heterogeneous transverse structure due to a characteristic which is not constant in the transverse direction of the base portion and being capable of rolling up on to itself ; said process being characterised by also including :

– an operation of cutting out a plurality of slits which are repeated in the direction of production of the cloth in such a way that the edges of the slits roll up on to themselves and thus create structures with a projecting lining and opening areas between said structures.

2. A process according to claim 1 characterised in that it further comprises, during the step of forming said base portion, the introduction of elastic strips or threads into the threads from which the base portion is produced.

3. A process according to claim 1 characterised in that prior to the cutting operation threads or strips are introduced into the base portion.

4. A process according to any one of claims 1 to 3 characterised in that the packing is drawn out in said direction in order to regularise the form of the cut portions.

5. A textile packing forming a support for bio-transformation and phase separation operations comprising a base portion (11) forming a continuous cloth, and a lining (12) formed on one of the faces of the base portion, the packing having a heterogeneous transverse structure capable of being rolled up on to itself, characterised in that a plurality of slits are disposed in the direction of production of the cloth, the edges of the slits being rolled up on to themselves and leaving between them opening areas permitting the free circulation of an ambient fluid.

6. A packing according to claim 5 characterised in that the base portion is a knitted portion.

7. A packing according to claim 5 characterised in that the lining is defined by tufts of fibres in the stitches of the knitted portion.

8. A packing according to one of claims 5 to 7 characterised in that the base portion comprises elastic strips or threads which reinforce the heterogeneity inherent in the transverse structure of the base portion.

9. A packing according to one of claims 5 to 8 characterised in that it is in cylindrical form and stretched around a drum.

10. A packing according to one of claims 5 to 9 characterised in that the pile of the lining can partially close off the opening areas.

**Ansprüche**

1. Verfahren zur Herstellung einer Textilfüllung als Träger für Bioumwandlungen und Phasentrennungen in einem Mehrphasenmedium, das folgende Schritte aufweist :

– Herstellung von Fäden aus Fasern ;

– Bildung eines Trägergewebes in Form eines kontinuierlichen Vlieses ausgehend von den hergestellten Fäden ;

– Veredelung einer Einlage, die mit den hergestellten Fäden auf einer der Seiten des Trägergewebes gebildet wird ;

– wobei die so gebildete Füllung eine quer verlaufende heterogene Struktur aufweist, die auf eine in Querrichtung zum Trägergewebe nicht konstante Eigenschaft zurückzuführen ist, und auf sich selbst aufrollbar ist ; wobei das genannte Verfahren weiterhin gekennzeichnet ist durch

– Ausschneiden mehrerer wiederholter Schlitze in Herstellungsrichtung des Vlieses, so daß sich die Ränder der Schlitze auf sich selbst aufrollen und somit Strukturen mit vorspringender Einlage und Öffnungen zwischen diesen Srukturen bilden.

2. Verfahren gemäß Anspruch 1, dadurch gekennzeichnet, daß es darüber hinaus während des Schrittes der Bildung des Trägergewebes die Einführung von elastischen Fäden oder Bändern in die Fäden beinhaltet, aus denen das Trägergewebe hergestellt wird.

3. Verfahren gemäß Anspruch 1, dadurch gekennzeichnet, daß vor dem Ausschneiden Fäden oder Bänder in das Trägergewebe eingeführt werden.

4. Verfahren gemäß einem der Ansprüche 1 bis 3, dadurch gekennzeichnet, daß die Füllung in die besagte Richtung gestreckt wird, um die Form der ausgeschnittenen Teile zu regulieren.

5. Textilfüllung als Träger für Bioumwandlungen und Phasentrennungen mit einem Trägergewebe (11), das ein kontinuierliches Vlies bildet, und einer Einlage (12), die auf einer der Seiten des Trägergewebes gebildet wird, wobei die Füllung eine heterogene auf sich selbst aufrollbare Querstruktur aufweist, dadurch gekennzeichnet, daß eine Vielzahl von Schlitzen in der Herstellungsrichtung des Vlieses angeordnet sind, wobei sich die Ränder der Schlitze auf sich selbst aufrollen und zwischen sich Öffnungen frei lassen, die die freie Zirkulation eines Umgebungsfluids ermöglichen.

6. Füllung nach Anspruch 5, dadurch gekennzeichnet, daß das Trägergewebe ein gestricktes Gewebe ist.

7. Füllung nach Anspruch 5, dadurch gekennzeichnet, daß die Einlage durch Faserbüschel in den Maschen des gestrickten Gewebes definiert ist.

8. Füllung nach einem der Ansprüche 5 bis 7, dadurch gekennzeichnet, daß das Trägergewebe elastische Fäden oder Bänder aufweist, die den heterogenen Charakter der Querstruktur des Trägergewebes verstärken.

9. Füllung nach einem der Ansprüche 5 bis 8, dadurch gekennzeichnet, daß sie eine zylindrische, auf eine Walze gespannte Form aufweist.

10. Füllung nach einem der Ansprüche 5 bis 9, dadurch gekennzeichnet, daß die Oberkette der Einlage die Öffnungen teilweise verschließen kann.

*FIG.1*

*FIG.2A*

*FIG.2B*

*FIG.2C*

*FIG.3A*

*FIG.3B*

## FIG.4A  FIG.4B  FIG.5

## FIG.6